# EUROPÄISCHE PATENTSCHRIFT

(11) **EP 3 656 960 B1**
(45) Veröffentlichungstag und Bekanntmachung des Hinweises auf die Patenterteilung: **30.10.2024**
(21) Anmeldenummer: 19210141.8
(22) Anmeldetag: 19.11.2019
(51) Int. Cl.: E05F 15/622, E05F 15/63, F16H 25/20, E05D 15/10, E05D 15/28

(54) **STELLGLIED UND LAGERUNGSEINRICHTUNG FÜR EINE KLAPPE**
VEHICLE HATCH KINEMATICS
CINÉMATIQUE POUR VOLET DE VÉHICULE

(30) Priorität: 22.11.2018 DE 102018220080
(43) Veröffentlichungstag der Anmeldung: 27.05.2020
(73) Patentinhaber: STABILUS GmbH, 56070 Koblenz (DE)
(72) Erfinder: Reif, Thomas, 56330 Kobern-Gondorf (DE); Hillen, Jörg, 56283 Nörtershausen (DE)
(74) Vertreter: Weickmann & Weickmann PartmbB

(56) Entgegenhaltungen:
- EP-A2- 1 770 237
- DE-A1- 102008 056 680
- FR-A1- 3 006 379

## Beschreibung

Die vorliegende Erfindung betrifft ein Stellglied, welches dazu eingerichtet ist, zwei übergeordnete Baugruppen, zwischen welchen das Stellglied angeordnet ist, relativ zueinander zu verlagern.

Derartige Stellglieder sind beispielsweise im Bereich von Fahrzeugtüren, wie Schwenktüren an Bussen, bekannt. Daher wird im Folgenden die Erfindung mit Bezug auf diesen Anwendungsfall beschrieben werden, wobei ausdrücklich darauf hingewiesen wird, dass die Erfindung natürlich nicht darauf zu beschränken ist. Im Bereich von Schwenktüren ist es ferner bekannt, starre Kopplungsstangen einzusetzen, welche einerseits mit einer Karosserie des Fahrzeugs und andererseits mit der Tür verbunden sind. Wird die Tür nun relativ zu der Karosserie verlagert, so folgt die Tür einer durch die Kopplungsstangen vorgegebenen Bahn. Da die Bahn der möglichen Verlagerung der Tür relativ zu der Karosserie zumeist kreisbogenförmig ist, ist der Anbringungspunkt der Kopplungsstangen an der Karosserie dadurch vorbestimmt. Ferner verschwenkt die Tür durch die starre Kopplungsstange meist zuerst weit von der Karosserie weg, bis sie sich in ihrem geöffneten Zustand an die Karosserie anlegt.

Aus dem Dokument EP 1 770 237 A2, welches als nächstliegender Stand der Technik betrachtet wird, ist ein Spindelantrieb bekannt, dessen Spindel mit einem ersten Kegelrad verbunden ist, wobei dieses Kegelrad wiederum mit einem zweiten Kegelrad kämmt, das von einem Elektromotor angetrieben wird, wobei der Spindelantrieb dazu eingerichtet ist, um die Antriebsachse eines Motors verlagerbar zu sein. Ferner sei auf die Dokumente FR 3 006 379 A1 und DE 10 2008 056680 A1 hingewiesen.

Es ist daher die Aufgabe der vorliegenden Erfindung, ein Stellglied bereitzustellen, welches es einerseits ermöglicht, eine Baugruppe, wie eine Tür, entlang einer gekrümmten, aber nicht zwangsläufig kreisbogenförmigen, Bahn zu verlagern, und welches es andererseits ermöglicht, den Verbindungspunkt des Stellglied an der Karosserie in einem größeren Bereich anordnen zu können als bei starren Kopplungsstangen.

Diese Aufgabe wird durch ein Stellglied gemäß Anspruch 1 gelöst.

Ein derartiges Stellglied ermöglicht zwei miteinander kombinierte Bewegungen. Zum einen eine Rotation des Spindelantriebs, und damit der mit dem Spindelantrieb verbundenen ersten übergeordneten Baugruppe, relativ zu der zweiten übergeordneten Baugruppe und zum anderen eine translatorische Verlagerung der ersten übergeordneten Baugruppe relativ zu der Rotationsachse des Spindelantriebs relativ zu der zweiten übergeordneten Baugruppe.

Insbesondere kann unter einer "Rotation des Spindelantriebs" verstanden werden, dass der gesamte Spindelantrieb bzw. zumindest die Spindel und die Spindelmutter gemeinsam verlagert werden. Ferner kann eine "Rotation des Spindelantriebs" bedeuten, dass eine Mittelachse der Spindel und/oder der Spindelmutter um ein mit der zweiten übergeordneten Baugruppe verbundenes Element, zum Beispiel eine Mittelachse der zweiten Verbindungseinheit oder eine Mittelachse des zweiten Zahnrads, rotiert wird. Ferner sei darauf hingewiesen, dass eine "Neigung" der Längsachse des Spindelantriebs zu der Mittelachse des zweiten Zahnrads jegliche von einer Koaxialität abweichende Neigung, zum Beispiel 30°, 45° oder 90°, umfassen kann.

Die erste übergeordnete Baugruppe, welche beispielsweise durch eine zu verschwenkende Tür gebildet ist, kann dadurch entlang einer beispielsweise elliptischen Bahn oder entlang einer Kreisbahn, deren Mittelpunkt außerhalb des Stellglieds liegt, verlagert werden. Somit können die beiden Endlagen eines gesamten Verlagerungsbereichs der ersten übergeordneten Baugruppe, zum Beispiel eine erste Endlage, in welcher die Tür einen Durchgangsbereich verschließt, und eine zweite Endlage, in welcher die Tür aus dem Durchgangsbereich heraus verlagert ist und gegen eine Fahrzeugkarosserie anliegt, weiter voneinander beabstandet angeordnet sein. Hierdurch können wiederum größere Durchgangsbereiche realisiert werden.

Beispielsweise kann wenigstens eines aus dem ersten Zahnrad und dem zweiten Zahnrad ein Kegelzahnrad oder ein Kronenzahnrad sein, welche gemäß der oben beschriebenen "Neigung" zueinander geneigt sein können.

Vorteilhafterweise kann das Stellglied derart ausgebildet sein, dass einer vorbestimmten Aktivierungsstellung des Spindelantriebs genau eine Winkelposition der Verlagerung des Spindelantriebs relativ zu der Mittelachse des zweiten Zahnrads zugeordnet ist und umgekehrt. Auf diese Weise geht eine Verlagerung der Spindel oder der Spindelmutter mit einer zwangsgekoppelten Verlagerung des Spindelantriebs um die Mittelachse des zweiten Zahnrads einher. Das heißt, jedem Winkel des Spindelantriebs um diese Mittelachse ist genau eine Längung des Spindelantriebs zugeordnet. Es kann so verhindert werden, dass die erste Verbindungseinheit bei einem gleichbleibenden Winkel des Spindelantriebs um die Mittelachse, d.h. relativ zu der zweiten übergeordneten Baugruppe, mehr als eine einzige vorbestimmte Position im dreidimensionalen Raum einnimmt.

In einer Weiterbildung der vorliegenden Erfindung kann das zweite Zahnrad mit einem das zweite Zahnrad umgebenden Gehäuse rotatorisch gekoppelt sein, und das Stellglied kann derart ausgebildet sein, dass eine relative Verlagerung der beiden Zahnräder zueinander eine Rotation des Gehäuses relativ zu der zweiten Verbindungseinheit hervorruft. Das bedeutet, dass eine Rotation des zweiten Zahnrads eine Rotation des Gehäuses hervorrufen kann. Ist der Spindelantrieb, welcher beispielsweise ebenfalls in einem Gehäuse angeordnet sein kann, mit dem das zweite Zahnrad umgebenden Gehäuse, zum Beispiel über das Gehäuse des Spindelantriebs, verbunden, so kann die Rotation des Gehäuses auch eine Rotation des Spindelantriebs hervorrufen. Somit kann eine Rotation des zweiten Zahnrads zum einen eine Aktivierung des Spindelantriebs und zum anderen eine Rotation des das zweite Zahnrad umgebenden Gehäuses antreiben.

Dabei kann zwischen dem zweiten Zahnrad und dem Gehäuse ein Getriebe angeordnet sein, welches zwischen einer Rotation des zweiten Zahnrads und einer Rotation des Gehäuses eine Übersetzung bereitstellt. Durch das Getriebe kann eine erste Rotationsgeschwindigkeit und/oder ein erstes Drehmoment der Rotation des zweiten Zahnrads auf der Zahnradseite des Getriebes in eine zweite Rotationsgeschwindigkeit und/oder in ein zweites Drehmoment auf der Gehäuseseite des Getriebes übersetzt werden.

Vorteilhafterweise kann das Getriebe über ein eine erste Gewindesteigung aufweisendes erstes Gewinde mit dem zweiten Zahnrad und über ein eine zweite Gewindesteigung aufweisendes zweites Gewinde mit dem Gehäuse in Eingriff stehen, wobei die erste Gewindesteigung von der zweiten Gewindesteigung verschieden sein kann. Es ist dadurch möglich, den Spindelantrieb und die Rotation des Gehäuses mit zwei voneinander verschiedenen Rotationsgeschwindigkeiten anzutreiben. Insbesondere sind die Gewindesteigungen derart gewählt, dass eine Rotationsgeschwindigkeit des Gehäuses, und damit gegebenenfalls des Spindelantriebs, relativ zu der zweiten übergeordneten Baugruppe, kleiner ist als eine Rotationsgeschwindigkeit der Spindel oder der Spindelmutter des Spindelantriebs. Durch Festlegen des Verhältnisses der ersten Gewindesteigung zu der zweiten Gewindesteigung kann definiert werden, über welchen Winkelbereich der Spindelantrieb verschwenkt wird, während er sich aus einer ersten, zum Beispiel vollständig eingefahrenen, Endlage in eine zweite, zum Beispiel vollständig ausgefahren, Endlage bewegt. Natürlich ist es sowohl denkbar, dass die beiden Gewinde jeweils konstante, aber gegebenenfalls voneinander verschiedene, Gewindesteigungen aufweisen, als auch dass ein jeweiliges Gewinde Gewindeabschnitte mit variierenden Gewindesteigungen aufweist. Hierdurch kann beispielsweise eine Längung des Spindelantriebs in einem ersten vordefinierten Winkelbereich der Verschwenkung des Spindelantriebs bzw. des Gehäuses relativ zu der zweiten übergeordneten Baugruppe geringer sein als in einem zweiten vordefinierten solchen Winkelbereich.

Das Getriebe kann ferner ein Zwischenstück umfassen, welches mit dem Gehäuse und dem zweiten Zahnrad in Gewindeeingriff steht, und welches mit der zweiten Verbindungseinheit drehfest, aber axial verlagerbar, gekoppelt ist. Die Anordnung eines Zwischenstücks, welches zwei voneinander getrennte Gewindeabschnitte aufweist, welche voneinander unterschiedliche Gewindesteigungen aufweisen, kann das Vorsehen einer komplexen Getriebeanordnung, wie beispielsweise eines Planetengetriebes, vermeiden. Hierdurch kann sowohl ein benötigter Bauraum als auch eine Fehleranfälligkeit der Anordnung deutlich reduziert werden.

Erfindungsgemäß umfasst das Stellglied eine Antriebseinheit, insbesondere einen Elektromotor, welche dazu eingerichtet ist, wenigstens eines aus dem ersten Zahnrad, dem zweiten Zahnrad, der Spindel, der Spindelmutter und dem Gehäuse anzutreiben. Die Antriebseinheit kann dabei dazu eingerichtet sein, ein Aktivierungssignal zu empfangen, welches wenigstens eines aus einer Rotationsrichtung und einer Rotationsgeschwindigkeit angibt, in welcher die Antriebseinheit anzutreiben ist.

Nachzutragen sei noch, dass es für den Umfang der vorliegenden Erfindung irrelevant ist, ob das zu verschwenkende Element der übergeordneten Baugruppe mit der ersten Verbindungseinheit oder mit der zweiten Verbindungseinheit verbunden ist. Eine Beschreibung einer Ausführungsform, bei welcher das zu verschwenkende Element mit dem längenveränderbaren Abschnitt des Stellglieds verbunden ist, wird weiter unten gegeben.

In einem zweiten Aspekt betrifft die Erfindung eine Lagerungseinrichtung für eine Klappe, insbesondere eine Schwenktür, umfassend eine Viergelenk-Anordnung, welche zwei parallel zueinander und lateral zueinander beabstandet angeordnete Kopplungsstangen umfasst, welche an ihrem jeweiligen einen Ende mit einer übergeordneten Baugruppe, insbesondere einer Fahrzeugkarossiere, schwenkbar verbunden sind, ein Schwenkelement, mit welchem die Kopplungsstangen der Viergelenk-Anordnung, insbesondere einem Rand des Schwenkelements benachbart, an ihrem jeweiligen anderen Ende schwenkbar verbunden sind, und ein erfindungsgemäßes Stellglied mit einem der voranstehend erwähnten Merkmale, welches an seinem einen Ende mit der übergeordneten Baugruppe schwenkbar verbunden ist und an seinem anderen Ende mit dem Schwenkelement schwenkbar verbunden ist, und welches dazu eingerichtet ist, auf eine Aktivierung des Stellglieds hin, das Schwenkelement relativ zu der übergeordneten Baugruppe zu verlagern.

Aus dem Stand der Technik sind Schwenkelemente, insbesondere Fahrzeugtüren, bekannt, welche an ihren vertikalen Längsenden über eine jeweilige Viergelenk-Anordnung mit einer Fahrzeugkarosserie verbunden sind. Diese Viergelenk-Anordnungen lassen sich schlecht verkleiden, d.h. in ein Design eines Fahrzeugs einfügen, und nehmen im geschlossenen Zustand mitunter viel Platz im Innenraum eines Fahrzeugs ein. Aufgrund des großen Bauraums einer derartigen Viergelenk-Anordnung, insbesondere bei geschlossener Tür, und einem gewünschten Freifahren eines gesamten Einstiegsbereichs in der Offenposition sind nur geringe Türbreiten realisierbar. Breite Einstiegsbereiche werden oft durch zwei gegenläufige Türen mit jeweiliger Viergelenk-Anordnung realisiert. Gerade im Bereich von geschwungen ausgebildeten Dachkonstruktionen kann eine derartige Viergelenk-Anordnung oft nicht angebracht werden.

Der zweite Aspekt der vorliegenden Erfindung kann es nun ermöglichen, auf die obere Viergelenk-Anordnung zu verzichten, das heißt lediglich eine einzige Viergelenk-Anordnung zwischen dem Schwenkelement und der übergeordneten Baugruppe vorzusehen. Das Stellglied kann hier beispielsweise ein, zum Beispiel in einem Gelenk angeordneter, Drehantrieb sein. Dabei kann das Schwenkelement mit den Kopplungsstangen der Viergelenk-Anordnung unter Verwendung von Kugelgelenken verbunden sein, so dass nicht nur eine Verschwenkung zwischen dem Schwenkelement und den Kopplungsstangen, sondern auch eine Verkippung erlaubt ist. Auf diese Weise können Toleranzen und Abweichungen in den Bahnkurven der Viergelenk-Anordnung und des Stellglieds ausgeglichen werden.

Es sei an dieser Stelle explizit nochmals darauf hingewiesen, dass die Merkmale und Vorteile des beschriebenen erfindungsgemäßen Stellglieds auf die Lagerungseinrichtung gleichermaßen Anwendung finden und umgekehrt.

Ferner kann das Stellglied eine Kopplungsstange umfassen, welche parallel zu den Kopplungsstangen der Viergelenk-Anordnung und lateral zu diesen beabstandet, insbesondere zu diesen gleich beabstandet, angeordnet ist. Bei einer Anordnung der Kopplungsstange, in einer vertikalen Richtung gesehen bzw. entlang einer horizontalen Richtung, zwischen den Kopplungsstangen der Viergelenk-Anordnung ist es möglich, einen für eine Lagerung des Schwenkelements an der übergeordneten Baugruppe benötigten Bauraum zu reduzieren.

Insbesondere können die beiden Kopplungsstangen der Viergelenk-Anordnung oder die beiden Kopplungsstangen der Viergelenk-Anordnung und die Kopplungsstange des Stellglieds eine gleiche Länge aufweisen. Werden nun Verbindungspunkte aller Kopplungsstangen an der übergeordneten Baugruppe und/oder an dem Schwenkelement auf einer gemeinsamen, vorzugsweise vertikalen, Ebene angeordnet, so kann es ermöglicht werden, dass das Schwenkelement während des Verschwenkens parallel zu dieser Ebene ausgerichtet verbleibt. In anderen Worten kann so vermieden werden, dass sich das Schwenkelement aus einer z.B. vertikalen Ausrichtung heraus neigt.

Das Stellglied kann, in einem betriebsbereiten Zustand der Lagerungseinrichtung, vertikal oberhalb der Viergelenk-Anordnung, insbesondere im Bereich der Hälfte einer vertikalen Erstreckung des Schwenkelements, angeordnet sein. Beispielsweise kann die Viergelenk-Anordnung im Bereich eines Bodens eines Fahrzeugs angeordnet sein, so dass die Viergelenk-Anordnung ausreichend Bauraum in Anspruch nehmen kann, ohne einen Fahrgastraum oder/und ein äußeres Design des Fahrzeugs zu beeinträchtigen. Die Viergelenk-Anordnung kann daher sehr stabil ausgeführt werden, so dass sie das Gewicht eines zu verschwenkenden Elements zum Beispiel vollständig tragen kann. Dem Stellglied kann nun lediglich die Aufgabe zugeteilt sein, das zu verschwenkende Element anzutreiben und es dabei an einem Verkippen aus einer vordefinierten Ausrichtung heraus zu hindern. Entsprechend kann das Stellglied platzsparend ausgebildet sein.

Die erfindungsgemäße Lagerungseinrichtung könnte anstelle für eine Schwenktür auch z.B. für ein Fenster oder ähnliches ausgelegt sein.

In einem dritten Aspekt der vorliegenden Erfindung betrifft die Erfindung eine Lagerungseinrichtung für eine Klappe, insbesondere eine Schwenktür, umfassend
ein erfindungsgemäßes Stellglied mit einem der voranstehend erwähnten Merkmale, welches an seinem einen Ende mit einer übergeordneten Baugruppe, insbesondere einer Fahrzeugkarossiere, schwenkbar verbunden ist, und
ein Schwenkelement, mit welchem das andere Ende des Stellglieds, insbesondere einem Rand des Schwenkelements benachbart, schwenkbar verbunden ist,
wobei das Stellglied dazu eingerichtet ist, auf eine Aktivierung hin, eine kombinierte Längenänderung eines ersten Abschnitts und eine relative Rotation des sich längenveränderbaren Abschnitts relativ zu einem einem Ende des längenveränderbaren Abschnitts zugeordneten zweiten Abschnitt des Stellglieds durchzuführen, um das Schwenkelement relativ zu der übergeordneten Baugruppe zu verlagern,
wobei das Stellglied derart ausgebildet ist, dass einer vorbestimmten Aktivierungsstellung des längenveränderbaren Abschnitts genau eine Winkelposition der Verlagerung des längenveränderbaren Abschnitts relativ zu einer Schwenkachse des längenveränderbaren Abschnitts zugeordnet ist und umgekehrt.

Natürlich ist es ebenfalls denkbar aber nicht erfindungsgemäß, dass anstatt des Spindelantriebs ein beispielsweise hydraulisch, pneumatisch oder magnetisch betriebener Antrieb vorgesehen ist, dessen Aktivierung nicht mechanisch, sondern beispielsweise unter Verwendung einer geeigneten Messvorrichtung, gekoppelt ist.

Ferner sei erwähnt, dass die "Verlagerung des längenveränderbaren Abschnitts relativ zu einer Schwenkachse des längenveränderbaren Abschnitts" nicht zwangsläufig bedeuten muss, dass es der längenveränderbare Abschnitt des Stellglieds ist, welcher sichtbar verschwenkt wird. Beispielsweise kann der längenveränderbare Abschnitt mit einer Fahrzeugkarosserie verbunden sein und ein nicht längenveränderbarer Abschnitt des Stellglieds wird verschwenkt. Entscheidend ist, dass zwischen einem längenveränderbaren Abschnitt des Stellglieds und einem weiteren Abschnitt des Stellglieds eine relative Rotation durchgeführt wird, während der längenveränderbare Abschnitt aktiviert, das heißt in seiner Länge verändert, wird.

Durch die Verwendung eines erfinfungsgemäßen Stellglieds, welches eine Zwangskopplung zwischen seiner Längenänderung und seiner Rotation aufweist, ist es möglich, den Verbindungspunkt des Stellglieds zu der übergeordneten Baugruppe nahezu beliebig zu variieren. Dennoch kann eine zum Beispiel zu einer Außenfläche der übergeordneten Baugruppe parallele Verlagerung des Schwenkelements durchgeführt werden.

In einer Weiterbildung der vorliegenden Erfindung kann das Stellglied an seinem dem längenveränderbaren Abschnitt zugeordneten Ende mit der übergeordneten Baugruppe verbunden sein und einen zwischen dem längenveränderbaren Abschnitt des Stellglieds und dem Schwenkelement angeordneten Abstandhalter umfassen. Beispielsweise kann ein Spindelantrieb des Stellglieds mit der Fahrzeugkarosserie derart verbunden sein, dass auf eine Aktivierung des Spindelantriebs hin das mit dem Abstandhalter verbundene Ende des Spindelantriebs relativ zu der Fahrzeugkarosserie verlagert wird. Dabei wird der Abstandshalter, welcher beispielsweise durch eine starre Stange gebildet ist, relativ zu dem Spindelantrieb rotiert. Eine derartige Anordnung kann zur Folge haben, dass ein Rotationsmittelpunkt des Abstandhalters gemäß der Längenänderung des Spindelantriebs linear verlagert wird. Auf diese Weise kann ein Schwenkelement, wie beispielsweise eine Tür, nicht nur gemäß dem durch die Rotation des Abstandhalters definierten Verschwenkungsbereich, sondern auch gemäß dem Hub des Spindelantriebs verlagert werden. Da sich der Drehpunkt des Scharniers verlagert, kann sich eine Vergrößerung eines möglichen Einstiegsbereichs ergeben, welcher durch das Öffnen der Tür freigegeben wird.

Natürlich können zwischen dem Schwenkelement und der Fahrzeugkarosserie zur weiteren Lagerung und Abstützung weitere Kopplungsstangen vorgesehen sein, zum Beispiel in Form einer Viergelenk-Anordnung.

In einer besonderen Ausführungsform der vorliegenden Erfindung kann die Lagerungseinrichtung ein weiteres Stellglied umfassen, insbesondere ein erfindungsgemäßes Stellglied mit einem der voranstehend erwähnten Merkmale, welches an seinem einen Ende mit der übergeordneten Baugruppe und an seinem anderen Ende mit dem Schwenkelement schwenkbar verbunden ist,
wobei das weitere Stellglied dazu eingerichtet sein kann, auf eine Aktivierung hin, eine kombinierte Längenänderung eines ersten Abschnitts und eine relative Rotation des sich längenveränderbaren Abschnitts relativ zu einem einem Ende des längenveränderbaren Abschnitts zugeordneten zweiten Abschnitt des weiteren Stellglieds durchzuführen, um das Schwenkelement relativ zu der übergeordneten Baugruppe zu verlagern,
wobei das weitere Stellglied derart ausgebildet sein kann, dass einer vorbestimmten Aktivierungsstellung des längenveränderbaren Abschnitts genau eine Winkelposition der Verlagerung des längenveränderbaren Abschnitts relativ zu einer Schwenkachse des längenveränderbaren Abschnitts zugeordnet ist und umgekehrt.

Durch die Anordnung von zwei voranstehend erwähnten zwangsgekoppelten Stellgliedern kann auf die Anordnung von weiteren Kopplungsstangen und/oder Viergelenk-Anordnungen vollständig verzichtet werden. Ferner kann dadurch ermöglicht werden, eine Tür maximal aus einem Einstiegsbereich zu verlagern. Bei geeigneter Auswahl des Verhältnisses von Rotation zu Längenänderung des jeweiligen Stellglieds kann eine Anbindung des jeweiligen Stellglieds an der übergeordneten Baugruppe nahezu frei gewählt werden.

Vorteilhafterweise kann eine Gewindesteigungsrichtung einer Spindel eines ersten Spindelantriebs des einen Stellglieds zu einer Gewindesteigungsrichtung einer Spindel eines zweiten Spindelantriebs des weiteren Stellglieds gegenläufig sein. Insbesondere kann dadurch ermöglicht werden, dass die Anbindungspunkte der beiden Stellglieder auf einer gemeinsamen, insbesondere zu einer Haupterstreckungsrichtung des Schwenkelements parallelen, beispielsweise vertikalen, Achse liegen. Es kann so eine Parallelverfahrung des Schwenkelements zu der übergeordneten Baugruppe erreicht werden. Über einen Verschwenkungsbereich des Schwenkelements, zum Beispiel der Tür, hinweg kann somit der längenveränderbare Abschnitt des einen Stellglieds verkürzt werden, während gleichzeitig der längenveränderbare Abschnitt des weiteren Stellglieds verlängert wird.

Auch hier könnte die erfindungsgemäße Lagerungseinrichtung anstelle für eine Schwenktür auch z.B. für ein Fenster oder ähnliches ausgelegt sein.

Im Folgenden wird die vorliegende Erfindung anhand von Ausführungsbeispielen mit Bezug auf die begleitenden Zeichnungen in größerem Detail beschrieben werden, in welchen
- Figur 1: eine perspektivische Ansicht einer Ausführungsform eines erfindungsgemäßen Stellglieds darstellt;
- Figur 2: eine Seitenquerschnittsansicht des erfindungsgemäßen Stellglieds aus Figur 1 darstellt;
- Figur 3: eine schematische Ansicht eines Abschnitts einer Schwenktür in einer ersten Ausführungsform darstellt;
- Figur 4a: eine schematische Ansicht eines Abschnitts einer Schwenktür in einer zweiten Ausführungsform und einer ersten Positionierung darstellt;
- Figur 4b: eine schematische Ansicht eines Abschnitts einer Schwenktür in der zweiten Ausführungsform von Figur 4a und einer zweiten Positionierung darstellt;
- Figuren 5a bis 5c: schematische Ansichten einer erfindungsgemäßen Lagerungseinrichtung in unterschiedlichen Positionierungen darstellen;
- Figuren 6a bis 6c: schematische Ansichten einer weiteren erfindungsgemäßen Lagerungseinrichtung in unterschiedlichen Positionierungen darstellen;
- Figur 7: eine Aufsicht einer zweiten Ausführungsform eines erfindungsgemäßen Stellglieds darstellt; und
- Figur 8: eine Seitenquerschnittsansicht des erfindungsgemäßen Stellglieds aus Figur 7 darstellt;

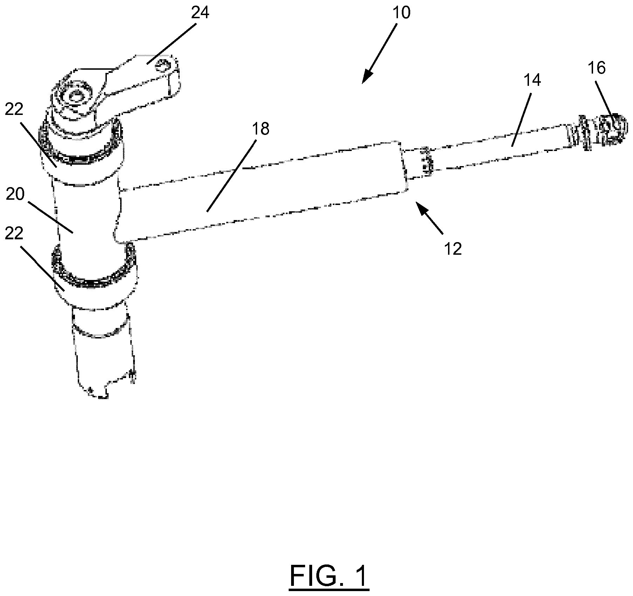

In Figur 1 ist ein erfindungsgemäßes Stellglied allgemein mit dem Bezugszeichen 10 versehen. Das Stellglied 10 umfasst einen längenveränderbaren ersten Abschnitt 12, welcher hier durch einen Spindelantrieb 12 gebildet ist. Der Spindelantrieb 12 umfasst ein Hüllrohr 14, welches mit einer ersten Verbindungseinheit 16 verbunden ist, um das Stellglied 10 mit einer ersten übergeordneten Baugruppe (nicht dargestellt) zu verbinden.

An seinem der ersten Verbindungseinheit 16 entgegengesetzten Ende ist der Spindelantrieb 12 von einem Rohr 18 umgeben, welches mit einem Gehäuse 20 des Stellglieds 10 fest verbunden ist. Das Gehäuse 20 ist relativ zu einer zweiten übergeordneten Baugruppe (nicht dargestellt) durch zwei Lager 22 drehbar gelagert. Ferner ist das Stellglied mit einer zweiten Verbindungseinheit 24 an der zweiten übergeordneten Baugruppe befestigt. Das Gehäuse 20 ist relativ zu der zweiten Verbindungseinheit 24 drehbar aber axialfest gelagert.

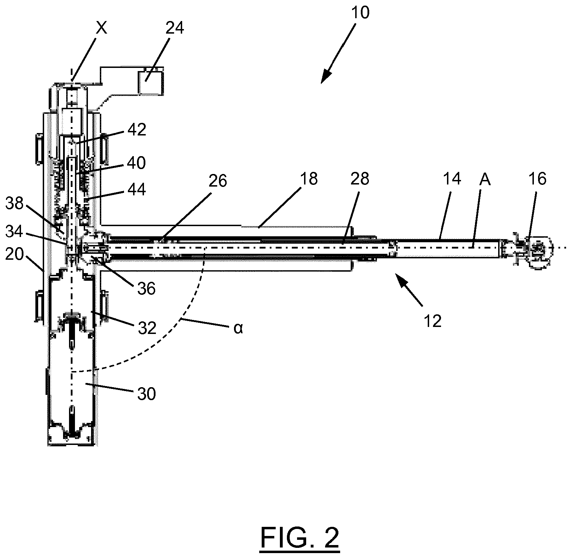

In dem in Figur 2 dargestellten Schnitt des Stellglieds 10 ist zu erkennen, dass das Hüllrohr 14 mit einer Spindelmutter 26 verbunden ist, welche wiederum mit einer Spindel 28 des Spindelantriebs 12 in Gewindeeingriff steht. Eine Rotation der Spindel 28 ruft somit eine axiale Verlagerung der Spindelmutter 26 hervor, wodurch das Hüllrohr 14 und damit die erste Verbindungseinheit 16 von dem Gehäuse 20 weg bzw. auf das Gehäuse 20 zu verlagert werden.

In Figur 2 ist ferner eine Antriebseinheit 30 dargestellt, welche beispielsweise durch einen Elektromotor ausgebildet ist. Die Antriebseinheit 30 ist mit einer Getriebeeinheit 32 verbunden, welche an ihrer der Antriebseinheit 30 entgegengesetzten Seite mit einer Abtriebswelle 34 verbunden ist.

Ein mit der Spindel 28 drehfest verbundenes erstes Zahnrad 36 ist mit einem mit der Abtriebswelle 34 drehfest verbundenen zweiten Zahnrad 38 in Eingriff. Treibt die Antriebseinheit 30 nun die Abtriebswelle 34 und damit das zweite Zahnrad 38 an, so wird das erste Zahnrad 36 zusammen mit der Spindel 28 in Rotation versetzt. Hierdurch wird, wie voranstehend erwähnt, die Spindelmutter 26 entlang einer Achse A, welche hier auch eine Mittelachse der Spindel 28 bildet, verlagert.

An ihrem der Getriebeeinheit 32 entgegengesetzten Seite weist die Abtriebswelle 34 ein erstes Gewinde 40 auf, welches mit einem entsprechenden Gegengewinde eines Zwischenelements 42 in Eingriff steht. Das Zwischenelement 42 ist an einem Abschnitt, welcher in der in Figur 2 dargestellten Ausführungsformen an einem oberen Ende des Zwischenelements 42 angeordnet ist, relativ zu der zweiten Verbindungseinheit 24 drehfest, aber axial verschiebbar, gelagert. An dem anderen, unteren, Ende des Zwischenelements 42 ist ein zweites Gewinde 44 angeordnet, welches mit einem entsprechenden Gegengewinde, welches mit dem Gehäuse 20 fest verbunden bzw. an einer Innenseite des Gehäuses 20 gebildet ist, in Eingriff steht.

Das erste Gewinde 40 weist hier eine deutlich kleinere Gewindesteigung auf als das zweite Gewinde 44. Auf eine Rotation der Abtriebswelle 34 hin wird das Zwischenelement 42 über das erste Gewinde 40 und aufgrund der oben beschriebenen Axialverzahnung zu der zweiten Verbindungseinheit 24 axial in Bezug auf die Abtriebswelle 34 bzw. in Bezug auf die zweite Verbindungseinheit 24 verlagert. Aufgrund des zweiten Gewindes 44 zwischen dem Zwischenelement 42 und dem Gehäuse 20 wird auf eine translatorische Verlagerung des Zwischenelements 42 hin das Gehäuse 20 in Rotation versetzt. Das Gehäuse 20 rotiert dabei um eine Schwenkachse X, welche hier zugleich eine Mittelachse der Abtriebswelle 34 und/oder des Zwischenelements 42 und/oder des zweiten Zahnrads 38 bildet.

Im Ergebnis bedeutet das, dass eine Aktivierung der Antriebseinheit 30 eine Rotation der Abtriebswelle 34 und des damit verbundenen Zahnrads 38 hervorruft, wodurch zum einen über das erste Zahnrad 36 der Spindelantrieb 12 aktiviert, das heißt verlängert oder verkürzt wird, und zum anderen das Rohr 18 zusammen mit dem Spindelantrieb 12 und dem Gehäuse 20 relativ zu der zweiten Verbindungseinheit 24 um die Schwenkachse X verschwenkt wird.

Es sei nochmals darauf hingewiesen, dass hierdurch eine Zwangskopplung entsteht, so dass eine Längenänderung des Spindelantriebs 12 nicht ohne eine Rotation des Gehäuses 20, und umgekehrt, durchgeführt werden kann. Ferner bedeutet das, dass je nach Auswahl des ersten Gewindes 40, des zweiten Gewindes 44, der beiden Zahnräder 36, 38 und/oder des Spindelantriebs 12 einem jeden Winkel des Gehäuses 20 relativ zu der zweiten Verbindungseinheit 24 exakt eine Längenposition des Spindelantriebs 12 zugeordnet ist.

Selbstverständlich aber nicht erfindungsgemäß kann das Stellglied 10 auch als passive Einheit, das heißt zumindest ohne die Antriebseinheit 30, ausgebildet sein, bei welcher eine Rotation des Gehäuses 20 eine Längenänderung des Spindelantriebs 12 oder eine Längenänderung des Spindelantriebs 12 eine Rotation des Gehäuses 20 relativ zu der zweiten Verbindungseinheit 24, beispielsweise aufgrund manueller Betätigung, hervorruft.

Ein Winkel α zwischen der Achse A und der Schwenkachse X beträgt in dem in Figur 2 dargestellten Ausführungsbeispiel in etwa 90°.

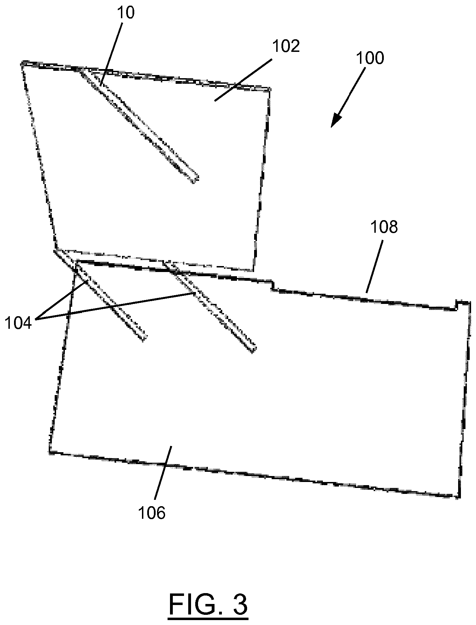

In der in Figur 3 dargestellten Lagerungseinrichtung 100 ist als ein Schwenkelement 102 eine Tür dargestellt. Für den zu beschreibenden erfinderischen Gedanken der Figur 3 ist es an dieser Stelle irrelevant, ob die Tür 102 vollständig dargestellt ist, oder ob nur beispielsweise eine untere Hälfte der Tür 102 in Figur 3 dargestellt ist.

Die Tür 102 ist mit einer Viergelenk-Anordnung 104 mit einer Fahrzeugkarosserie 106 verbunden. Die Viergelenk-Anordnung 104 ist hier aus zwei identischen und parallel zueinander angeordneten Kopplungsstangen gebildet. Die Viergelenk-Anordnung 104 ist an der Fahrzeugkarosserie 106 derart angelenkt, dass die Kopplungsstangen der Viergelenk-Anordnung 104 relativ zu der Fahrzeugkarosserie 106 entlang nur einer einzigen, beispielsweise horizontalen, Ebene verschwenken können.

An einer vertikal höher gelegenen Position der Tür 102 ist zwischen der Tür 102 und einem nicht dargestellten Abschnitt der Fahrzeugkarosserie 106 ein Stellglied 10 gemäß der voranstehenden Beschreibung, angeordnet. Dabei ist in Figur 3 das Stellglied 10 parallel zu den Kopplungsstangen der Viergelenk-Anordnung 104 ausgerichtet, so dass das Stellglied 10 in der Darstellung der Figur 3 auch ein Drehantrieb mit einer starren Kopplungsstange zwischen dem Drehantrieb und der Tür 102 sein kann.

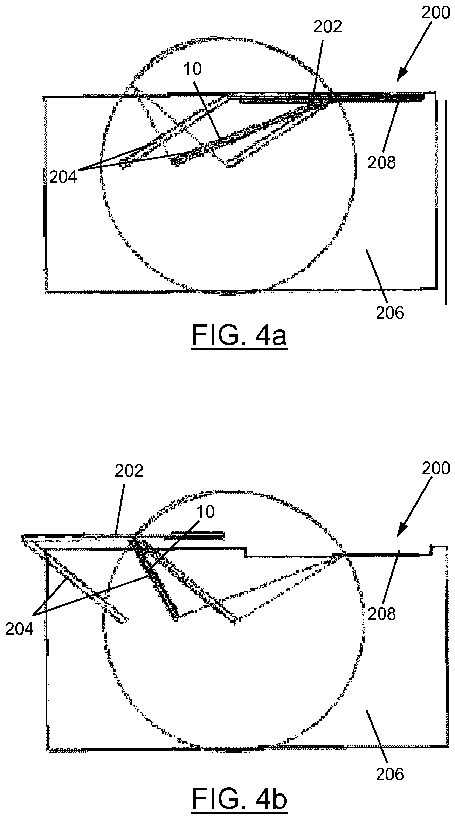

In Figur 3 ist der Zustand dargestellt, in welchem die Tür 102 aus einer Einstiegsöffnung 108 eines die Fahrzeugkarosserie 106 umfassenden Fahrzeugs heraus verschwenkt ist, um die Einstiegsöffnung 108 freizugeben. In den Figuren 4a und 4b ist eine Lagerungseinrichtung 200 dargestellt, bei welcher das "Zweigelenk" mit fester Kopplungsstange durch ein längenveränderbares Stellglied 10 ersetzt ist. Im Übrigen entspricht die in den Figuren 4a und 4b gezeigte Anordnung 200 einer Aufsicht auf die in Figur 3 gezeigten Anordnung 100, auf welche an dieser Stelle explizit verwiesen sei. Demgemäß werden im Folgenden lediglich die Unterschiede der in den Figuren 4a und 4b gezeigten Anordnung 200 zu der in der Figur 3 gezeigten Anordnung 100 beschrieben werden.

Im Gegensatz zu der Lagerungseinrichtung 100 kann das Stellglied 10 der Lagerungseinrichtung 200 an einer nahezu beliebigen Stelle mit der Fahrzeugkarosserie 206 verbunden werden. In dem in den Figuren 4a und 4b dargestellten Ausführungsbeispiel ist das Stellglied 10, in der vertikalen Aufsicht dieser Figuren gesehen, zwischen den beiden Kopplungsstangen der Viergelenk-Anordnung 204 angeordnet. Es ist jedoch zu erkennen, dass der Verbindungspunkt zwischen dem Stellglied und der Fahrzeugkarosserie 206 nicht mittig zwischen den beiden Kopplungsstangen der Viergelenk-Anordnung 204, sondern der der Einstiegsöffnung 208 entfernt angeordneten Kopplungsstange der Viergelenk-Anordnung 204 benachbart, angeordnet ist. Ebenso wie in der Lagerungseinrichtung 100 kann auch das Stellglied der Lagerungseinrichtung 200 beispielsweise auf halber Höhe der Tür 202, in jedem Fall jedoch vertikal oberhalb der Viergelenk-Anordnung 204, angeordnet sein.

In Figur 4a ist nun der Zustand dargestellt, in welchem die Tür 202 die Einstiegsöffnung 208 verschließt. Das Stellglied 10 befindet sich dabei in seiner ausgefahrenen Endlage.

In Figur 4b ist entsprechend der Zustand dargestellt, in welchem die Tür 202 die Einstiegsöffnung 208 freigibt. Das Stellglied 10 befindet sich dabei in seiner eingefahrenen Endlage.

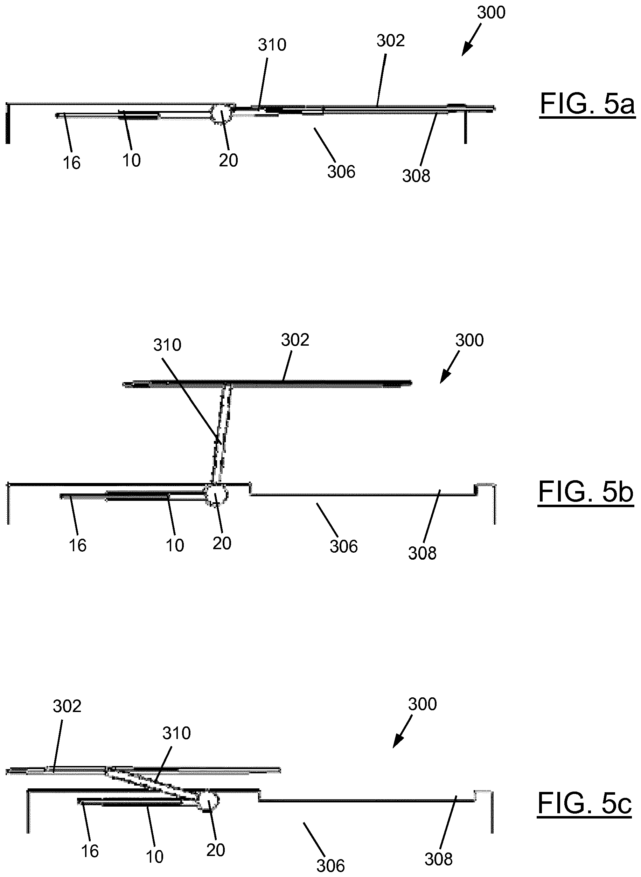

Die Figuren 5a bis 5c zeigen eine weitere Anordnungsmöglichkeit einer Lagerungseinrichtung 300. Ebenso wie die Figuren 3, 4a und 4b, auf welche in Bezug auf die folgende Beschreibung explizit verwiesen sei, zeigen auch die Figuren 5a bis 5c eine Tür 302, welche eine Einstiegsöffnung 308 eines eine Fahrzeugkarosserie 306 umfassendes Fahrzeug verschließen oder freigeben kann.

Mit der Fahrzeugkarosserie 306 ist ein erfindungsgemäßes Stellglied 10, wie oben beschrieben, verbunden. Dabei ist das Stellglied 10 mit seinem freien Ende des längenveränderbaren Abschnitts mit der Fahrzeugkarosserie 306 verbunden. Mit Bezug auf die in Figuren 1 und 2 beschriebene Ausführungsform des Stellglieds 10 ist die erste Verbindungseinheit 16 mit der Fahrzeugkarosserie 306 verbunden. Ein Abstandshalter 310, welcher hier als eine starre Stange ausgebildet ist, ist an seinem einen Ende mit dem Gehäuse 20 und an seinem anderen Ende mit der Tür 302 verbunden, wobei er an der Tür 302 schwenkbar gelagert ist.

Auf eine Aktivierung des Stellglieds 10 hin, welche eine zwangsgekoppelte Längenänderung des längenveränderbaren Abschnitts und eine Rotation des Gehäuses 20, und damit des Abstandhalters 310, hervorruft, wird, in der Abfolge der Figuren 5a bis 5c gesehen, der längenveränderbare Abschnitt, beispielsweise der Spindelantrieb 12, des Stellglieds 10 verkürzt und relativ dazu das Gehäuse 20 mit dem Abstandshalter 310 rotiert. Dies hat zur Folge, dass die Tür zum einen gemäß der Rotation des Gehäuses 20 aus der Einstiegsöffnung 308 heraus verschwenkt und dass zugleich das Gehäuse 20, und damit eine Schwenkachse der Tür 302, linear gemäß der Verkürzung des längenveränderbaren Abschnitts des Stellglieds 10 verlagert wird. Aufgrund der gekoppelten rotatorischen und translatorischen Verlagerung der Tür 302 aus der Einstiegsöffnung 308 kann ein größerer Einstiegsbereich 308 freigegeben bzw. verschlossen werden.

Zur Stabilisierung der Tür 302 kann es beispielsweise denkbar sein, zwei Stellglieder 10 anzuordnen.

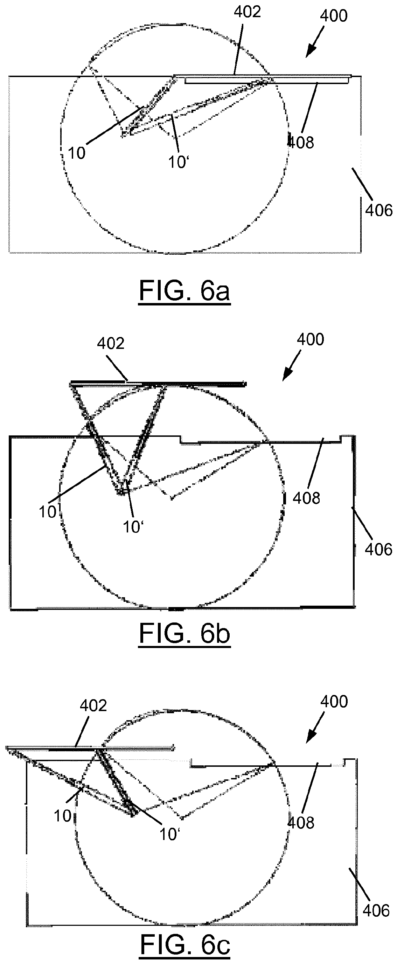

Die Figuren 6a bis 6c zeigen eine weitere Lagerungseinrichtung 400. Die Lagerungseinrichtung 400 unterscheidet sich von den voranstehend erwähnten Ausführungsformen 100 bis 300, auf welche hiermit explizit verwiesen sei, insbesondere dadurch, dass zwei zwangsgekoppelte Stellglieder, welche hierdurch zwei erfindungsgemäße Stellglieder 10 und 10' realisiert sind, welche an ihrem einen Ende mit einer Fahrzeugkarosserie 406 und an ihrem anderen Ende mit einer Tür 402 verbunden sind. Analog zu den voranstehend erwähnten Ausführungsformen ist die Tür 402 dazu eingerichtet, eine Einstiegsöffnung 408 zu verschließen oder freizugeben. Im Folgenden sei daher lediglich auf die Unterschiede zu den voranstehend erwähnten Ausführungsformen eingegangen.

Die beiden Stellglieder 10 und 10' sind mit ihrem längenveränderbaren Abschnitt, welcher in dem hier dargestellten Ausführungsbeispiel durch den Spindelantrieb 12 ausgebildet ist, zwischen der Fahrzeugkarosserie 406 und der Tür 402 angeordnet. Der Spindelantrieb 12 des Stellglieds 10 ist dabei an einem Rand der Tür 402 angelenkt, wohingegen der Spindelantrieb 12 des weiteren Stellglieds 10' im Bereich einer Mitte der Tür 402 angelenkt ist.

In dem besonderen Ausführungsbeispiel, welches in den Figuren 6a bis 6c dargestellt ist, fallen die Verbindungspunkte der Stellglieder 10 und 10' an der Fahrzeugkarosserie 406 zusammen.

Die Gewindesteigungsrichtungen, d.h. der Drehsinn der Gewinde, der Spindelantriebe 12 des Stellglieds 10 und des weiteren Stellglieds 10' sind gegensätzlich, so dass bei einer Rotation der beiden längenveränderbaren Abschnitte der Stellglieder 10 und 10' in dem gleichen Drehsinn der eine Abschnitt verlängert wird, wohingegen der andere Abschnitt verkürzt wird. Im Falle einer identischen Gewindesteigungshöhe der beiden Gewinde der Stellglieder 10 und 10' kann so die Tür 402 parallel verlagert werden, das heißt, eine Orientierung der Tür 402 zu der Fahrzeugkarosserie 406 bleibt während der Verlagerung der Tür 402 konstant.

In der Figur 6a verschließt die Tür 402 die Einstiegsöffnung 408. Das Stellglied 10 ist dabei vollständig eingefahren und das weitere Stellglied 10' ist dabei vollständig ausgefahren.

In der Figur 6b ist die Tür 402 aus der Einstiegsöffnung 408 heraus verlagert und befindet sich in etwa an der Hälfte des Verlagerungsbereichs zwischen den maximalen Stellungen der Figuren 6a und 6c. Die längenveränderbaren Abschnitte der Stellglieder 10 und 10' befinden sich beide in etwa an der Hälfte ihres längenveränderbaren Bereichs. Insbesondere befinden sich die längenveränderbaren Abschnitte der Stellglieder 10 und 10' in einer gleichen Stellung in Bezug auf deren Längenänderbarkeit.

In der Figur 6c gibt die Tür 402 die Einstiegsöffnung 408 vollständig frei. Das Stellglied 10 ist dabei vollständig ausgefahren und das weitere Stellglied 10' ist dabei vollständig eingefahren.

Die beiden Stellglieder 10 und 10' sind hier beispielsweise an einem unteren Rand der Tür 402 und an einem Boden der Fahrzeugkarosserie 406 angeordnet.

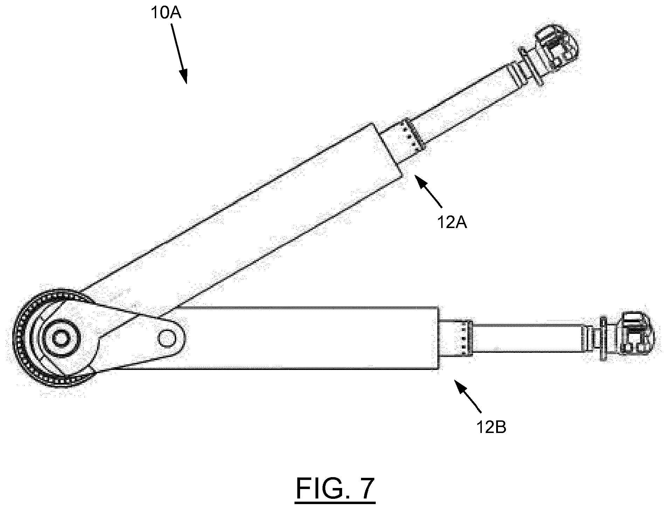

Wie in Figur 7 dargestellt, können die beiden Stellglieder 10 und 10' auch durch eine zweite Ausführungsform eines erfindungsgemäßen Stellglieds 10A realisiert werden, welches im Wesentlichen identisch zu dem erfindungsgemäßen Stellglied 10 ausgebildet ist, jedoch, anstelle von einem, zwei Spindelantriebe, nämlich einen ersten Spindelantrieb 12A und einen zweiten Spindelantrieb 12B, umfasst.

Aus diesem Grund sei an dieser Stelle in Bezug auf das Stellglied 10A explizit auf die Ausführungen zu dem Stellglied 10 bzw. 10' verwiesen. Im Folgenden werden daher lediglich die Unterschiede des Stellglieds 10A zu dem Stellglied 10 bzw. 10' beschrieben werden.

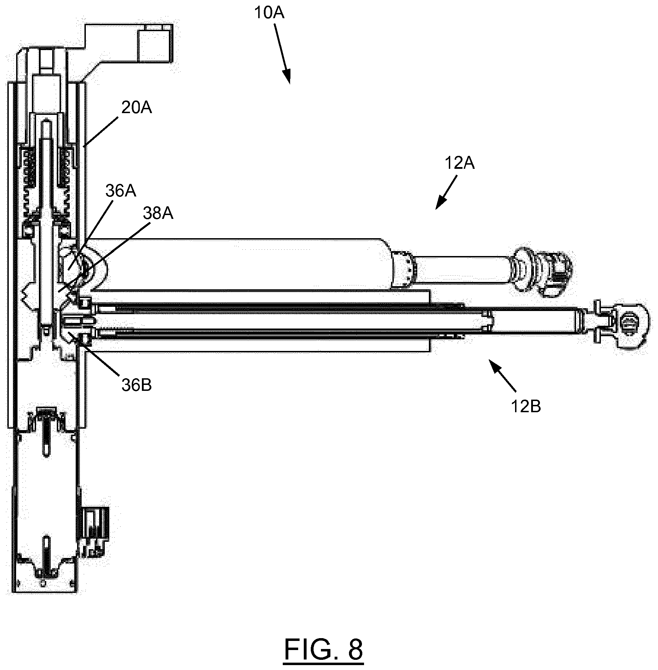

Wie in der Seitenquerschnittsansicht von Figur 8 zu erkennen ist, erstrecken sich der erste Spindelantrieb 12A und der zweite Spindelantrieb 12B im Wesentlichen rechtwinklig von dem Gehäuse 20A des Stellglieds 10A. Wie in Bezug auf das Stellglied 10 beschrieben, wird auch hier der zweite Spindelantrieb 12B von einem in dem Gehäuse 20A angeordneten Zahnrad 38A angetrieben. Das Zahnrad 38A, welches auch hier als Kegelrad ausgebildet ist, weist jedoch nicht nur eine Verzahnung zu einem Zahnrad 36B des zweiten Spindelantriebs 12B auf, sondern auch eine Verzahnung zu einem Zahnrad 36A des ersten Spindelantriebs 12A. Das Zahnrad 38A kann somit als doppelt ausgebildetes Kegelrad angesehen werden.

Das bedeutet, dass, wenn das Zahnrad 38A angetrieben wird, die Zahnräder 36A und 36B ebenfalls und in einer relativ zu einer Rotation des Zahnrads 38A synchronen Weise, angetrieben werden, so dass der erste Spindelantrieb 12A und der zweite Spindelantrieb 12B betätigt werden.

Die beiden Spindelantriebe 12A und 12B können beispielsweise zueinander gleiche Gewindesteigungen aufweisen, welche jedoch in einer zueinander entgegengesetzten Richtung ansteigen. Somit kann auf eine Rotation des Zahnrads 38A hin zum Beispiel der erste Spindelantrieb 12A um einen vorbestimmten Weg verlängert und der zweite Spindelantrieb 12B um den gleichen Weg verkürzt werden.

Natürlich ist es ebenfalls denkbar, dass die beiden Spindelantriebe 12A und 12B zueinander unterschiedliche Gewindesteigungen bzw. Abschnitte von in Bezug aufeinander unterschiedlichen Gewindesteigungen aufweisen.

## Patentansprüche

1. Stellglied (10, 10A), umfassend
einen Spindelantrieb (12, 12A, 12B), welcher eine Spindel (28) und eine mit der Spindel (28) in Gewindeeingriff stehende Spindelmutter (26) umfasst,
ein erstes Zahnrad (36), welches mit der Spindel (28) oder der Spindelmutter (26) rotatorisch gekoppelt ist,
wobei das jeweils andere aus der Spindelmutter (26) oder der Spindel (28) mit einer ersten Verbindungseinheit (16) zur Verbindung des Stellglieds (10, 10A) mit einer ersten übergeordneten Baugruppe (102, 202, 302, 402; 106, 206, 306, 406) verbunden ist, wobei der Spindelantrieb (12, 12A, 12B) dazu eingerichtet ist, dass eine Rotation des ersten Zahnrads (36) eine translatorische Verlagerung der ersten Verbindungseinheit (16) hervorruft, und
ein zweites Zahnrad (38), welches mit dem ersten Zahnrad (36) in Eingriff steht und welches mit einer zweiten Verbindungseinheit (24) zur Verbindung des Stellglieds (10, 10A) mit einer zweiten übergeordneten Baugruppe (106, 206, 306, 406; 102, 202, 302, 402) rotatorisch gekoppelt ist,
wobei eine Längsachse (A) des Spindelantriebs (12, 12A, 12B) zu einer Mittelachse (X), insbesondere zu einer Rotationsachse (X), des zweiten Zahnrads (38) geneigt ist, wobei das Stellglied (10, 10A) dazu eingerichtet ist, dass eine relative Rotation der beiden Zahnräder (36, 38) zueinander eine Betätigung des Spindelantriebs (12, 12A, 12B) sowie eine Verlagerung des Spindelantriebs (12, 12A, 12B) relativ zu der Mittelachse (X) des zweiten Zahnrads (38) hervorruft oder eine Betätigung des Spindelantriebs (12, 12A, 12B) eine relative Rotation der beiden Zahnräder (36, 38) zueinander sowie eine Verlagerung des Spindelantriebs (12, 12A, 12B) relativ zu der Mittelachse (X) des zweiten Zahnrads (38) hervorruft,
wobei das Stellglied (10, 10A) eine Antriebseinheit (30), insbesondere einen Elektromotor, umfasst, welche dazu eingerichtet ist, wenigstens eines aus dem ersten Zahnrad (36), dem zweiten Zahnrad (38), der Spindel (28), der Spindelmutter (26) und dem Gehäuse (20) anzutreiben.

2. Stellglied (10, 10A) nach Anspruch 1,
**dadurch gekennzeichnet, dass** das Stellglied (10, 10A) derart ausgebildet ist, dass einer vorbestimmten Aktivierungsstellung des Spindelantriebs (12, 12A, 12B) genau eine Winkelposition der Verlagerung des Spindelantriebs (12, 12A, 12B) relativ zu der Mittelachse (X) des zweiten Zahnrads (38) zugeordnet ist und umgekehrt.

3. Stellglied (10, 10A) nach Anspruch 1 oder 2,
**dadurch gekennzeichnet, dass** das zweite Zahnrad (38) mit einem das zweite Zahnrad (38) umgebenden Gehäuse (20) rotatorisch gekoppelt ist, und dass das Stellglied (10, 10A) derart ausgebildet ist, dass eine relative Verlagerung der beiden Zahnräder (36, 38) zueinander eine Rotation des Gehäuses (20) relativ zu der zweiten Verbindungseinheit (24) hervorruft.

4. Stellglied (10, 10A) nach Anspruch 3,
**dadurch gekennzeichnet, dass** zwischen dem zweiten Zahnrad (38) und dem Gehäuse (20) ein Getriebe angeordnet ist, welches zwischen einer Rotation des zweiten Zahnrads (38) und einer Rotation des Gehäuses (20) eine Übersetzung bereitstellt.

5. Stellglied (10, 10A) nach Anspruch 4,
**dadurch gekennzeichnet, dass** das Getriebe über ein eine erste Gewindesteigung aufweisendes erstes Gewinde (40) mit dem zweiten Zahnrad (38) und über ein eine zweite Gewindesteigung aufweisendes zweites Gewinde (44) mit dem Gehäuse (20) in Eingriff steht, wobei die erste Gewindesteigung von der zweiten Gewindesteigung verschieden ist.

6. Stellglied (10, 10A) nach Anspruch 4 oder 5,
**dadurch gekennzeichnet, dass** das Getriebe ferner ein Zwischenstück (42) umfasst, welches jeweils mit dem Gehäuse (20) und dem zweiten Zahnrad (38) in Gewindeeingriff steht, und welches mit der zweiten Verbindungseinheit (24) drehfest, aber axial verlagerbar, gekoppelt ist.

7. Lagerungseinrichtung (100, 200) für eine Klappe, insbesondere eine Schwenktür (102, 202), umfassend
eine Viergelenk-Anordnung (104, 204), welche zwei parallel zueinander und lateral zueinander beabstandet angeordnete Kopplungsstangen umfasst, welche an ihrem jeweiligen einen Ende mit einer übergeordneten Baugruppe (106, 206), insbesondere einer Fahrzeugkarossiere (106, 206), schwenkbar verbunden sind,
ein Schwenkelement (102, 202), mit welchem die Kopplungsstangen der Viergelenk-Anordnung (104, 204), insbesondere einem Rand des Schwenkelements (102, 202) benachbart, an ihrem jeweiligen anderen Ende schwenkbar verbunden sind, und
ein Stellglied nach einem der Ansprüche 1 bis 6, welches an seinem einen Ende mit der übergeordneten Baugruppe (106, 206) schwenkbar verbunden ist und an seinem anderen Ende mit dem Schwenkelement (102, 202) schwenkbar verbunden ist, und welches dazu eingerichtet ist, auf eine Aktivierung des Stellglieds (10, 10A) hin, das Schwenkelement (102, 202) relativ zu der übergeordneten Baugruppe (106, 206) zu verlagern.

8. Lagerungseinrichtung (100, 200) nach Anspruch 7,
**dadurch gekennzeichnet, dass** das Stellglied (10, 10A) eine Kopplungsstange umfasst, welche parallel zu den Kopplungsstangen der Viergelenk-Anordnung (104, 204) und lateral zu diesen beabstandet, insbesondere zu diesen gleich beabstandet, angeordnet ist.

9. Lagerungseinrichtung (100, 200) nach Anspruch 7 oder 8,
**dadurch gekennzeichnet, dass** die beiden Kopplungsstangen der Viergelenk-Anordnung (104, 204) oder die beiden Kopplungsstangen der Viergelenk-Anordnung (104, 204) und die Kopplungsstange des Stellglieds (10, 10A) eine gleiche Länge aufweisen.

10. Lagerungseinrichtung (100, 200) nach einem der Ansprüche 7 bis 9,
**dadurch gekennzeichnet, dass** das Stellglied (10, 10A), in einem betriebsbereiten Zustand der Lagerungseinrichtung (100, 200), vertikal oberhalb der Viergelenk-Anordnung (104, 204), insbesondere im Bereich der Hälfte einer vertikalen Erstreckung des Schwenkelements (102, 202), angeordnet ist.

11. Lagerungseinrichtung (300, 400) für eine Klappe, insbesondere eine Schwenktür, umfassend
ein Stellglied (10, 10A) nach einem der Ansprüche 1 bis 6, welches an seinem einen Ende mit einer übergeordneten Baugruppe (306, 406), insbesondere einer Fahrzeugkarossiere (306, 406), schwenkbar verbunden ist, und
ein Schwenkelement (302, 402), mit welchem das andere Ende des Stellglieds (10, 10A), insbesondere einem Rand des Schwenkelements (302, 402) benachbart, schwenkbar verbunden ist,
wobei das Stellglied (10, 10A) dazu eingerichtet ist, auf eine Aktivierung hin, eine kombinierte Längenänderung eines ersten Abschnitts (12, 12A, 12B) und eine relative Rotation des sich längenveränderbaren Abschnitts (12, 12A, 12B) relativ zu einem einem Ende des längenveränderbaren Abschnitts (12, 12A, 12B) zugeordneten zweiten Abschnitt (24) des Stellglieds (10, 10A) durchzuführen, um das Schwenkelement (302, 402) relativ zu der übergeordneten Baugruppe (306, 406) zu verlagern,
wobei das Stellglied (10, 10A) derart ausgebildet ist, dass einer vorbestimmten Aktivierungsstellung des längenveränderbaren Abschnitts (12, 12A, 12B) genau eine Winkelposition der Verlagerung des längenveränderbaren Abschnitts (12, 12A, 12B) relativ zu einer Schwenkachse (X) des längenveränderbaren Abschnitts (12, 12A, 12B) zugeordnet ist und umgekehrt.

12. Lagerungseinrichtung (300, 400) nach Anspruch 11,
**dadurch gekennzeichnet, dass** das Stellglied (10, 10A) an seinem dem längenveränderbaren Abschnitt (12, 12A, 12B) zugeordneten Ende mit der übergeordneten Baugruppe (306, 406) verbunden ist und einen zwischen dem längenveränderbaren Abschnitt (12, 12A, 12B) des Stellglieds (10, 10A) und dem Schwenkelement (302, 402) angeordneten Abstandhalter (310) umfasst.

13. Lagerungseinrichtung (300, 400) nach Anspruch 11 oder 12,
**dadurch gekennzeichnet, dass** die Lagerungseinrichtung (300, 400) ein weiteres Stellglied (10') umfasst, insbesondere ein Stellglied (10, 10A) nach einem der Ansprüche 1 bis 7, welches an seinem einen Ende mit der übergeordneten Baugruppe (306, 406) und an seinem anderen Ende mit dem Schwenkelement (302, 402) schwenkbar verbunden ist,
wobei das weitere Stellglied (10') dazu eingerichtet ist, auf eine Aktivierung hin, eine kombinierte Längenänderung eines ersten Abschnitts (12, 12A, 12B) und eine relative Rotation des sich längenveränderbaren Abschnitts (12, 12A, 12B) relativ zu einem einem Ende des längenveränderbaren Abschnitts (12, 12A, 12B) zugeordneten zweiten Abschnitt (24) des weiteren Stellglieds (10') durchzuführen, um das Schwenkelement (302, 402) relativ zu der übergeordneten Baugruppe (306, 406) zu verlagern,
wobei das weitere Stellglied (10') derart ausgebildet ist, dass einer vorbestimmten Aktivierungsstellung des längenveränderbaren Abschnitts (12, 12A, 12B) genau eine Winkelposition der Verlagerung des längenveränderbaren Abschnitts (12, 12A, 12B) relativ zu einer Schwenkachse (X) des längenveränderbaren Abschnitts (12, 12A, 12B) zugeordnet ist und umgekehrt.

14. Lagerungseinrichtung (300, 400) nach Anspruch 13,
**dadurch gekennzeichnet, dass** eine Gewindesteigungsrichtung einer Spindel (28) eines ersten Spindelantriebs (12, 12A, 12B) zu einer Gewindesteigungsrichtung einer Spindel eines zweiten Spindelantriebs gegenläufig ist.

## Claims

1. Actuator (10, 10A), comprising
a spindle drive (12, 12A, 12B) which comprises a spindle (28) and a spindle nut (26) in threaded engagement with the spindle (28),
a first gear (36) which is rotationally coupled to the spindle (28) or the spindle nut (26),
wherein the respective other of the spindle nut (26) or the spindle (28) is connected to a first connecting unit (16) for connecting the actuator (10, 10A) to a first superordinate assembly (102, 202, 302, 402; 106, 206, 306, 406), wherein the spindle drive (12, 12A, 12B) is designed such that a rotation of the first gear (36) effects a translational displacement of the first connecting unit (16), and
a second gear (38) which engages with the first gear (36) and which is rotationally coupled to a second connecting unit (24) for connecting the actuator (10, 10A) to a second superordinate assembly (106, 206, 306, 406; 102, 202, 302, 402),
wherein a longitudinal axis (A) of the spindle drive (12, 12A, 12B) is inclined relative to a central axis (X), in particular to a rotation axis (X), of the second gear (38), wherein the actuator (10, 10A) is designed such that a relative rotation of the two gears (36, 38) with respect to one another effects an actuation of the spindle drive (12, 12A, 12B) and a displacement of the spindle drive (12, 12A, 12B) relative to the central axis (X) of the second gear (38) or an actuation of the spindle drive (12, 12A, 12B) effects a relative rotation of the two gears (36, 38) with respect to one another and also a displacement of the spindle drive (12, 12A, 12B8) relative to the central axis (X) of the second gear (38),
wherein the actuator (10, 10A) comprises a drive unit (30), in particular an electric motor, which is designed to drive at least one of the first gear (36), the second gear (38), the spindle (28), the spindle nut (26) and the housing (20).

2. Actuator (10, 10A) according to claim 1,
**characterised in that** the actuator (10, 10A) is designed such that exactly one angular position of the displacement of the spindle drive (12, 12A, 12B) relative to the central axis (X) of the second gear (38) is assigned to a predetermined activation position of the spindle drive (12, 12A, 12B) and vice versa

3. Actuator (10, 10A) according to claim 1 or 2,
**characterised in that** the second gear (38) is rotationally coupled to a housing (20) surrounding the second gear (38), and that the actuator (10, 10A) is designed such that a relative displacement of the two gears (36, 38) with respect to one another effects a rotation of the housing (20) relative to the second connecting unit (24).

4. Actuator (10, 10A) according to claim 3,
**characterised in that** a gear transmission is arranged between the second gear (38) and the housing (20), which provides for a transmission between a rotation of the second gear (38) and a rotation of the housing (20).

5. Actuator (10, 10A) according to claim 4,
**characterised in that** the gear transmission engages with the second gear (38) via a first thread (40) having a first thread pitch and engages with the housing (20) via a second thread (44) having a second thread pitch, wherein the first thread pitch is different from the second thread pitch.

6. Actuator (10, 10A) according to claim 4 or 5,
**characterised in that** the gear transmission furthermore comprises an intermediate piece (42), which is in threaded engagement respectively with the housing (20) and the second gear (38), and which is coupled to the second connecting unit (24) in a rotationally fixed but axially displaceable manner.

7. Bearing device (100, 200) for a flap, in particular a pivoting door (102, 202), comprising a four-link arrangement (104, 204) which comprises two coupling rods arranged parallel to and laterally spaced apart from one another, which are pivotally connected at their respective one end to a superordinate assembly (106, 206), in particular a vehicle body (106, 206), a pivoting element (102, 202) to which the coupling rods of the four-link arrangement (104, 204), in particular adjacent to an edge of the pivoting element (102, 202), are pivotally connected at their respective other end, and an actuator according to one of claims 1 to 6, which is pivotally connected at its one end to the superordinate assembly (106, 206) and is pivotally connected at its other end to the pivoting element (102, 202), and which is designed to displace the pivoting element (102, 202) relative to the superordinate assembly (106, 206) on activation of the actuator (10, 10A).

8. Bearing device (100, 200) according to claim 7,
**characterised in that** the actuator (10, 10A) comprises a coupling rod which is arranged parallel to the coupling rods of the four-link arrangement (104, 204) and is laterally spaced therefrom, in particular is equally spaced therefrom.

9. Bearing device (100, 200) according to claim 7 or 8,
**characterised in that** the two coupling rods of the four-link arrangement (104, 204) or the two coupling rods of the four-link arrangement (104, 204) and the coupling rod of the actuator (10, 10A) have the same length.

10. Bearing device (100, 200) according to one of claims 7 to 9,
**characterised in that** the actuator (10, 10A), in an operationally ready state of the bearing device (100, 200), is arranged vertically above the four-link arrangement (104, 204), in particular in the region of half of a vertical extension of the pivoting element (102, 202).

11. Bearing device (300, 400) for a flap, in particular a pivoting door, comprising
an actuator (10, 10A) according to one of claims 1 to 6, which is pivotably connected at one end to a superordinate assembly (306, 406), in particular a vehicle body (306, 406), and
a pivoting element (302, 402) to which the other end of the actuator (10, 10A), in particular adjacent to an edge of the pivoting element (302, 402), is pivotably connected,
wherein the actuator (10, 10A) is designed, on activation, to effect a combined change in length of a first section (12, 12A, 12B) and to effect a relative rotation of the length-adjustable section (12, 12A, 12B) relative to a second section (24) of the actuator (10, 10A) assigned to one end of the length-adjustable section (12, 12A, 12B), in order to displace the pivoting element (302, 402) relative to the superordinate assembly (306, 406),
wherein the actuator (10, 10A) is designed such that exactly one angular position of the displacement of the length-adjustable section (12, 12A, 12B) relative to a pivot axis (X) of the length-adjustable section (12, 12A, 12B) is assigned to a predetermined activation position of the length-adjustable section (12, 12A, 12B), and vice versa.

12. Bearing device (300, 400) according to claim 11,
**characterised in that** the actuator (10, 10A) is connected to the superordinate assembly (306, 406) at its end assigned to the length-adjustable section (12, 12A, 12B), and comprises a spacer (310) arranged between the length-adjustable section (12, 12A, 12B) of the actuator (10, 10A) and the pivoting element (302, 402).

13. Bearing device (300, 400) according to claim 11 or 12,
**characterised in that** the bearing device (300, 400) comprises a further actuator (10'), in particular an actuator (10, 10A) according to one of claims 1 to 7, which is pivotally connected at its one end to the superordinate assembly (306, 406) and at its other end to the pivoting element (302, 402),
wherein the further actuator (10') is designed, on activation, to effect a combined change in length of a first section (12, 12A, 12B) and a relative rotation of the length-adjustable section (12, 12A, 12B) relative to a second section (24) of the further actuator (10') assigned to one end of the length-adjustable section (12, 12A, 12B), in order to displace the pivoting element (302, 402) relative to the superordinate assembly (306, 406),
wherein the further actuator (10) is designed such that exactly one angular position of the displacement of the length-adjustable section (12, 12A, 12B) relative to a swivel axis (X) of the length-adjustable section (12, 12A, 12B) is assigned to a predetermined activation position of the length-adjustable section (12, 12A, 12B), and vice versa.

14. Bearing device (300, 400) according to claim 13,
**characterised in that** a thread pitch direction of a spindle (28) of a first spindle drive (12, 12A, 12B) is opposite to a thread pitch direction of a spindle of a second spindle drive.

## Revendications

1. Actionneur (10, 10A) comprenant
un entraînement de broche (12, 12A, 12B), qui comprend une broche (28) et un écrou de broche (26) en prise par filetage avec la broche (28),
une première roue dentée (36) qui est couplée en rotation à la broche (28) ou à l'écrou de broche (26),
dans lequel l'autre de l'écrou de broche (26) ou de la broche (28) est relié à une première unité de liaison (16) pour relier l'actionneur (10, 10A) à un premier ensemble supérieur (102, 202, 302, 402 ; 106, 206, 306, 406),
dans lequel l'entraînement de broche (12, 12A, 12B) est conçu de telle sorte qu'une rotation de la première roue dentée (36) provoque un déplacement en translation de la première unité de liaison (16), et
une deuxième roue dentée (38) qui est en prise avec la première roue dentée (36) et qui est couplée en rotation à une deuxième unité de liaison (24) pour relier l'actionneur (10, 10A) à un deuxième ensemble supérieur (106, 206, 306, 406 ; 102, 202, 302, 402),
dans lequel un axe longitudinal (A) de l'entraînement de broche (12, 12A, 12B) est incliné par rapport à un axe central (X), en particulier par rapport à un axe de rotation (X), de la deuxième roue dentée (38),
dans lequel l'actionneur (10, 10A) est conçu pour qu'une rotation relative des deux roues dentées (36, 38) l'une par rapport à l'autre déclenche un actionnement de l'entraînement de broche (12, 12A, 12B) ainsi qu'un déplacement de l'entraînement de broche (12, 12A, 12B) par rapport à l'axe central (X) du deuxième roue dentée (38) ou l'actionnement de l'entraînement de broche (12, 12A, 12B) provoque une rotation relative des deux roues dentées (36, 38) l'un par rapport à l'autre ainsi qu'un déplacement de l'entraînement de broche (12, 12A, 12B) par rapport à l'axe central (X) du deuxième roue dentée (38),
dans lequel l'actionneur (10, 10A) comprend une unité d'entraînement (30), en particulier un moteur électrique, qui est adaptée pour entraîner au moins l'un de la première roue dentée (36), de la deuxième roue dentée (38), de la broche (28), de l'écrou de broche (26) et du boîtier (20).

2. Actionneur (10, 10A) selon la revendication 1,
**caractérisé en ce que** l'actionneur (10, 10A) est configuré de telle sorte qu'à une position d'activation prédéterminée de l'entraînement de la broche (12, 12A, 12B) est associée précisément une position angulaire de déplacement de l'entraînement de la broche (12, 12A, 12B) par rapport à l'axe central (X) de la deuxième roue dentée (38) et inversement.

3. Actionneur (10, 10A) selon la revendication 1 ou 2,
**caractérisé en ce que** la deuxième roue dentée (38) est couplée en rotation à un boîtier (20) entourant la deuxième roue dentée, et **en ce que** l'actionneur (10, 10A) est conçu de telle sorte qu'un déplacement relatif des deux roues dentées (36, 38) l'une par rapport à l'autre provoque une rotation du boîtier (20) par rapport à la deuxième unité de liaison (24).

4. Actionneur (10, 10A) selon la revendication 3,
**caractérisé en ce qu'**entre la deuxième roue dentée (38) et le boîtier (20) est disposé un engrenage qui fournit une transmission entre une rotation de la deuxième roue dentée (38) et une rotation du boîtier (20).

5. Actionneur (10, 10A) selon la revendication 4,
**caractérisé en ce que** l'engrenage est en prise avec la deuxième roue dentée (38) par un premier filetage (40) présentant un premier pas de vis et avec le boîtier (20) par un deuxième filetage (44) présentant un deuxième pas de vis, le premier pas de vis étant différent du deuxième pas de vis.

6. Actionneur (10, 10A) selon la revendication 4 ou 5,
**caractérisé en ce que** l'engrenage comprend en outre une pièce intermédiaire (42) qui est en prise par filetage avec le boîtier (20) et la deuxième roue dentée (38) respectivement, et qui est couplée à la deuxième unité de liaison (24) de manière à ne pas pouvoir tourner, mais à pouvoir se déplacer axialement.

7. Dispositif de montage (100, 200) pour un volet, en particulier une porte pivotante (102, 202), comprenant
un agencement à quatre articulations (104, 204) qui comprend deux tiges d'accouplement disposées parallèlement l'une à l'autre et espacées latéralement l'une de l'autre qui sont reliées de manière pivotante à l'une de leurs extrémités respectives à un ensemble supérieur (106, 206), en particulier à une carrosserie de véhicule (106, 206),
un élément pivotant (102, 202) auquel les tiges d'accouplement de l'agencement à quatre articulations (104, 204) sont reliées de manière pivotante à leur autre extrémité respective, en particulier au voisinage d'un bord de l'élément pivotant (102, 202), et un actionneur selon l'une des revendications 1 à 6, qui est relié de manière pivotante à l'une de ses extrémités au ensemble supérieur (106, 206) et est relié de manière pivotante à son autre extrémité à l'élément pivotant (102, 202), et est adapté pour déplacer l'élément pivotant (102, 202) par rapport à l'ensemble supérieur (106, 206) lors de l'activation de l'actionneur (10, 10A).

8. Dispositif de montage (100, 200) selon la revendication 7, **caractérisé en ce que** l'actionneur (10, 10A) comprend une tige d'accouplement qui est disposée parallèlement aux tiges d'accouplement de l'agencement à quatre articulations (104, 204) et à une distance latérale de celles-ci, en particulier à une distance égale de celles-ci.

9. Dispositif de montage (100, 200) selon la revendication 7 ou 8, **caractérisé en ce que** les deux tiges d'accouplement de l'agencement à quatre articulations (104, 204) ou les deux tiges d'accouplement de l'agencement à quatre articulations (104, 204) et la tige d'accouplement de l'actionneur (10, 10A) présentent une longueur identique.

10. Dispositif de montage (100, 200) selon l'une des revendications 7 à 9, **caractérisé en ce que** l'actionneur (10, 10A), dans un état opérationnel du dispositif de montage (100, 200), est disposé verticalement au-dessus de l'agencement à quatre articulations (104, 204), notamment au niveau de la moitié d'une extension verticale de l'élément pivotant (102, 202).

11. Dispositif de montage (300, 400) pour un volet, en particulier une porte pivotante, comprenant
un'actionneur(10, 10A) selon l'une des revendications 1 à 6, qui est relié de manière pivotante à l'une de ses extrémités à un ensemble supérieur (306, 406), en particulier à une carrosserie de véhicule (306, 406), et
un élément pivotant (302, 402) auquel l'autre extrémité de l'actionneur (10, 10A) est reliée de manière pivotante, en particulier au voisinage d'un bord de l'élément pivotant (302, 402),
dans lequel l'actionneur (10, 10A) est conçu pour produire, en réponse à une activation, une variation combinée de la longueur d'une première section (12, 12A, 12B) et une rotation relative de la section à longueur variable (12, 12A, 12B) par rapport à une deuxième section (24) de l'actionneur (10, 10A) associée à une extrémité de la section à longueur variable (12, 12A, 12B) afin de déplacer l'élément pivotant (302, 402) par rapport à l'ensemble supérieur (306, 406),
dans lequel l'actionneur (10, 10A) est conçu de telle sorte qu'à une position d'activation prédéterminée de la section à longueur variable (12, 12A, 12B) est associée exactement une position angulaire de déplacement de la section à longueur variable (12, 12A, 12B) par rapport à un axe de pivotement (X) de la section à longueur variable (12, 12A, 12B) et inversement.

12. Dispositif de montaget (300, 400) selon la revendication 11,
**caractérisé en ce que** l'actionneur (10, 10A) est relié à l'ensemble supérieur (306, 406) à son extrémité associée à la section à longueur variable (12, 12A, 12B) et comprend une entretoise (310) disposée entre la section à longueur variable (12, 12A, 12B) de l'actionneur (10, 10A) et l'élément de pivotement (302, 402).

13. Dispositif de montage (300, 400) selon la revendication 11 ou 12, **caractérisé en ce que** le dispositif de montage (300, 400) comprend un actionneur supplémentaire (10'), notamment un actionneur (10, 10A) selon l'une des revendications 1 à 7, qui est relié de manière pivotante à l'une de ses extrémités à l'ensemble supérieur (306, 406) et à son autre extrémité à l'élément pivotant (302, 402),
dans lequel l'actionneur supplémentaire (10) est adapté pour effectuer, en réponse à une activation, une variation combinée de la longueur d'une première section (12, 12A, 12B) et une rotation relative de la section à longueur variable (12, 12A, 12B) par rapport à une deuxième section (24) de l'actionneur supplémentaire (10') associée à une extrémité de la section à longueur variable (12, 12A, 12B) afin de déplacer l'élément pivotant (302, 402) par rapport à l'ensemble supérieur (306, 406),
dans lequel l'actionneur supplémentaire (10') est conçu de telle sorte qu'à une position d'activation prédéterminée de la section à longueur variable (12, 12A, 12B) est associée exactement une position angulaire de déplacement de la section à longueur variable (12, 12A, 12B) par rapport à un axe de pivotement (X) de la section à longueur variable (12, 12A, 12B) et inversement.

14. Dispositif de montage (300, 400) selon la revendication 13,
**caractérisé en ce qu'**une direction de pas de vis d'une broche (28) d'un premier entraînement de broche (12, 12A, 12B) est opposée à une direction de pas de vis d'une broche d'un deuxième entraînement de broche.
